(19) Europäisches Patentamt
European Patent Office
Office européen des brevets

(11) EP 2 792 692 A1

(12) EUROPEAN PATENT APPLICATION

(43) Date of publication:
**22.10.2014 Bulletin 2014/43**

(51) Int Cl.:
***C08F 210/06*** *(2006.01)*

(21) Application number: **13164134.2**

(22) Date of filing: **17.04.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Basell Poliolefine Italia S.r.l.**
**20127 Milano (IT)**

(72) Inventors:
- **Galvan, Monica**
  **44122 Ferrara (IT)**
- **Neumann, Andreas**
  **44122 Ferrara (IT)**
- **Caputo, Tiziana**
  **44122 Ferrara (IT)**
- **Mazzucco, Antonio**
  **44122 Ferrara (IT)**
- **Pellegatti, Giampaolo**
  **44122 Ferrara (IT)**

(74) Representative: **Colucci, Giuseppe**
**Basell Poliolefine Italia S.r.l.**
**Intellectual Property**
**Piazzale G. Donegani 12**
**44122 Ferrara (IT)**

# (54) Nucleated propylene-based polyolefin compositions

(57) A polyolefin composition, particularly fit for the production of extrusion blow molded articles, comprising (a) a propylene-ethylene copolymer having a content of units deriving from ethylene of 4.0 % by weight or higher, and (b) a nucleating agent and having a crystallization temperature (Tc) higher than 117°C can be obtained by copolymerizing propylene and ethylene in the presence of a catalyst system obtained by contacting a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other selected from 1,3 diethers, an aluminum hydrocarbyl compound, and optionally an external electron donor compound.

EP 2 792 692 A1

## Description

The present invention relates to a nucleated propylene copolymer composition tailored for use in extrusion blow molding. The invention also relates to manufactured articles, in particular extrusion blow molded articles, obtainable from said composition and to processes for the preparation thereof and of the propylene copolymer composition.

Propylene copolymers have a good balance of physical-mechanical properties that makes them fit for use in extrusion processes, in particular to obtain extrusion blow molded articles,. Propylene copolymers commonly used in extrusion processes are endowed with an acceptable stiffness, good impact properties especially at low temperatures and good optical properties, i.e. low haze values. The desired balance of properties in propylene copolymers suitable for extrusion processes is normally obtained by carefully dosing the comonomer content of the propylene copolymers. Increasing the comonomer content brings about an improvement in the impact resistance of the copolymers while inevitably deteriorating the stiffness. On the other hand, lowering the comonomer content results in improved stiffness but the impact resistance is worsened. The comonomer content variation has also a strong influence on the melting and crystallization temperature of propylene copolymers that are lowered by increasing the comonomer content. International application No. WO 2008/012144 discloses propylene copolymers having a total content of units deriving from a linear or branched alpha-olefin having 2 to 8 carbon atoms other than propylene ranging from 4.5 to 6.0 % by weight suitable for use in extrusion blow molding. Those copolymers may be used in combination with a nucleating agent.

In extrusion blow molding the productivity is strongly influenced by the cooling step, therefore it is important for the polymer to be endowed with high melting and crystallization temperature.

It would be desirable to provide propylene-based polymer compositions that, when used in extrusion blow molding, show improved productivity while maintaining a good balance of physical-mechanical properties. Therefore, according to a first object, the present invention provides a polyolefin composition comprising:

(a) a propylene-ethylene copolymer having a content of units deriving from ethylene of 4.0 % by weight or higher, preferably ranging from 4.0 to 7.0 % by weight, and
(b) a nucleating agent;

wherein the composition has a crystallization temperature ($T_c$), measured by DSC, higher than 117°C, preferably higher than 117.5°C, more preferably higher than 118°C.

The polyolefin composition according to the invention generally has the following additional features:

- melting temperature ($T_m$), measured by DSC, of higher than 154.5°C, preferably of 155°C or higher;
- xylene soluble fraction at 25°C lower than 18 wt%, preferably lower than 15 wt%;
- melt flow rate (MFR) ranging from 0.1 to 25 g/10 min, preferably from 0.5 to 5 g/10 min and more preferably from 1.2 to 2.5 g/10min.

The desired MFR can be obtained directly on the "as reactor" polymers or, particularly for MFR higher than 5 g/10 min, it can be obtained by visbreaking the "as reactor" polymers according to known methods. The nucleating agent is generally present in the composition in amounts of up to 2500 ppm, preferably from 500 to 2000 ppm.

The nucleating agent can be selected among inorganic additives such as talc, silica or kaolin, salts of monocarboxylic or polycarboxylic acids, e.g. sodium benzoate or aluminum tert-butylbenzoate, dibenzylidenesorbitol or its C1-C8-alkyl-substituted derivatives such as methyldibenzylidenesorbitol, ethyldibenzylidenesorbitol or dimethyldibenzylidenesorbitol or salts of diesters of phosphoric acid, e.g. sodium or lithium 2,2'-methylenebis(4,6,-di-tert-butylphenyl)phosphate. Particularly preferred nucleating agents are 3,4-dimethyldibenzylidenesorbitol; aluminum-hydroxy-bis[2,2'-methylene-bis(4,6-di-t-butylphenyl)phosphate]; sodium or lithium 2,2'-methylene-bis(4,6-ditertbutylphenyl)phosphate and bicyclo[2.2.1]heptane-2,3-dicarboxylic acid, disodium salt (1R,2R,3R,4S). The at least one nucleating agent may be added to the propylene polymer by known methods, such as by melt blending the at least one nucleating agent and the propylene polymer under shear condition in a conventional extruder.

The propylene-ethylene copolymers for use in the composition of the present invention are obtainable by polymerizing propylene and ethylene in the presence of specific Ziegler-Natta catalysts.

Therefore, according to another object the present invention provides a process for the preparation of a propylene-ethylene copolymer comprising the step of copolymerizing propylene and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and

(c) optionally an external electron donor compound.

In the solid catalyst component (a) the succinate is preferably selected from succinates of formula (I):

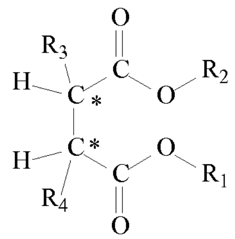

(I)

in which the radicals R1 and R2, equal to, or different from, each other are a C1-C20 linear or branched alkyl, alkenyl, cycloalkyl, aryl, arylalkyl or alkylaryl group, optionally containing heteroatoms; and the radicals R3 and R4 equal to, or different from, each other, are C1-C20 alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S)
R1 and R2 are preferably C1-C8 alkyl, cycloalkyl, aryl, arylalkyl and alkylaryl groups. Particularly preferred are the compounds in which R1 and R2 are selected from primary alkyls and in particular branched primary alkyls. Examples of suitable R1 and R2 groups are methyl, ethyl, n-propyl, n-butyl, isobutyl, neopentyl, 2-ethylhexyl. Particularly preferred are ethyl, isobutyl, and neopentyl.

Particularly preferred are the compounds in which the R3 and/or R4 radicals are secondary alkyls like isopropyl, sec-butyl, 2-pentyl, 3-pentyl or cycloakyls like cyclohexyl, cyclopentyl, cyclohexylmethyl.

Examples of the above-mentioned compounds are the (S,R) (S,R) forms pure or in mixture, optionally in racemic form, of diethyl 2,3-bis(trimethylsilyl)succinate, diethyl 2,3-bis(2-ethylbutyl)succinate, diethyl 2,3-dibenzylsuccinate, diethyl 2,3-diisopropylsuccinate, diisobutyl 2,3-diisopropylsuccinate, diethyl 2,3-bis(cyclohexylmethyl)succinate, diethyl 2,3-diisobutylsuccinate, diethyl 2,3-dineopentylsuccinate, diethyl 2,3-dicyclopentylsuccinate, diethyl 2,3-dicyclohexylsuccinate.

Among the 1,3-diethers mentioned above, particularly preferred are the compounds of formula (II):

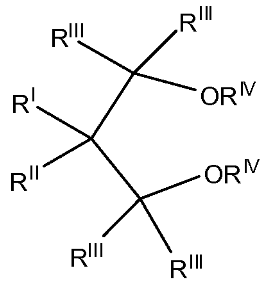

(II)

where RI and RII are the same or different and are hydrogen or linear or branched C1-C18 hydrocarbon groups which can also form one or more cyclic structures; RIII groups, equal or different from each other, are hydrogen or C1-C18 hydrocarbon groups; RIV groups equal or different from each other, have the same meaning of RIII except that they cannot be hydrogen; each of RI to RIV groups can contain heteroatoms selected from halogens, N, O, S and Si.

Preferably, RIV is a 1-6 carbon atom alkyl radical and more particularly a methyl while the RIII radicals are preferably hydrogen. Moreover, when RI is methyl, ethyl, propyl, or isopropyl, RII can be ethyl, propyl, isopropyl, butyl, isobutyl, tert-butyl, isopentyl, 2-ethylhexyl, cyclopentyl, cyclohexyl, methylcyclohexyl, phenyl or benzyl; when RI is hydrogen, RII can be ethyl, butyl, sec-butyl, tert-butyl, 2-ethylhexyl, cyclohexylethyl, diphenylmethyl, p-chlorophenyl, 1-naphthyl, 1-decahydronaphthyl; RI and RII can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-ffuorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane,2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexymethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (III):

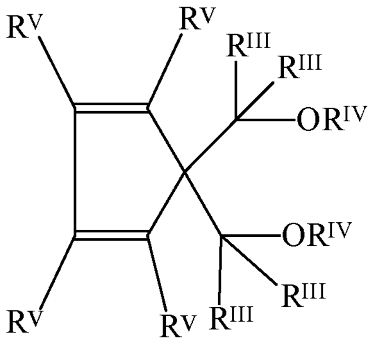

(III)

where the radicals RIV have the same meaning explained above and the radicals RIII and RV radicals, equal or different to each other, are selected from the group consisting of hydrogen; halogens, preferably Cl and F; C1-C20 alkyl radicals, linear or branched; C3-C20 cycloalkyl, C6-C20 aryl, C7-C20 alkaryl and C7-C20 aralkyl radicals and two or more of the RV radicals can be bonded to each other to form condensed cyclic structures, saturated or unsaturated, optionally substituted with RVI radicals selected from the group consisting of halogens, preferably Cl and F; C1-C20 alkyl radicals, linear or branched; C3-C20 cycloalkyl, C6-C20 aryl, C7-C20 alkaryl and C7-C20 aralkyl radicals; said radicals RV and RVI optionally containing one or more heteroatoms as substitutes for carbon or hydrogen atoms, or both.

Preferably, in the 1,3-diethers of formulae (I) and (II) all the RIII radicals are hydrogen, and all the RIV radicals are methyl. Moreover, are particularly preferred the 1,3-diethers of formula (II) in which two or more of the RV radicals are bonded to each other to form one or more condensed cyclic structures, preferably benzenic, optionally substituted by RVI radicals. Specially preferred are the compounds of formula (IV):

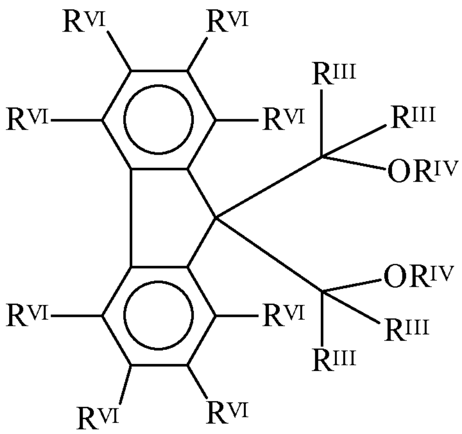

(IV)

where the RVI radicals equal or different are hydrogen; halogens, preferably Cl and F; C1-C20 alkyl radicals, linear or

branched; C3-C20 cycloalkyl, C6-C20 aryl, C7-C20 alkylaryl and C7-C20 aralkyl radicals, optionally containing one or more heteroatoms selected from the group consisting ofN, 0, S, P, Si and halogens, in particular Cl and F, as substitutes for carbon or hydrogen atoms, or both; the radicals RIII and RIV are as defined above for formula (II).

Specific examples of compounds comprised in formulae (II) and (III) are:

1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1--bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyisilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1--bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

As explained above, the catalyst component (a) comprises, in addition to the above electron donors, a titanium compound having at least a Ti-halogen bond and a Mg halide. The magnesium halide is preferably MgCl2 in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are TiCl4 and TiCl3; furthermore, also Ti-haloalcoholates of formula Ti(OR)n-yXy can be used, where n is the valence of titanium, y is a number between 1 and n-1 X is halogen and R is a hydrocarbon radical having from 1 to 10 carbon atoms.

Preferably, the catalyst component (a) has an average particle size ranging from 15 to 80 μm, more preferably from 20 to 70 μm and even more preferably from 25 to 65 μm. As explained the succinate is present in an amount

ranging from 40 to 90% by weight with respect to the total amount of donors. Preferably it ranges from 50 to 85% by weight and more preferably from 65 to 80% by weight. The 1,3-diether preferably constitutes the remaining amount.

The alkyl-Al compound (b) is preferably chosen among the trialkyl aluminum compounds such as for example triethylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as AlEt2Cl and Al2Et3Cl3.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula Ra5Rb6Si(OR7)c, where a and b are integer from 0 to 2, c is an integer from 1 to 3 and the sum (a+b+c) is 4; R5, R6, and R7, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropylmetil-dimethoxysilane. The external electron donor compound is used in such an amount to give a molar ratio between the organo-aluminum compound and said electron donor compound of from 5 to 500, preferably from 5 to 400 and more preferably from 10 to 200.

The catalyst forming components can be contacted with a liquid inert hydrocarbon solvent such as, e.g., propane, n-hexane or n-heptane, at a temperature below about 60°C and preferably from about 0 to 30°C for a time period of from about 6 seconds to 60 minutes.

The above catalyst components (a), (b) and optionally (c) can be fed to a pre-contacting vessel, in amounts such that the weight ratio (b)/(a) is in the range of 0.1-10 and if the compound (c) is present, the weight ratio (b)/(c) is weight ratio corresponding to the molar ratio as defined above. Preferably, the said components are pre-contacted at a temperature of from 10 to 20°C for 1-30 minutes. The precontact vessel is generally a stirred tank reactor.

Preferably, the precontacted catalyst is then fed to a prepolymerization reactor where a prepolymerization step takes place. The prepolymerization step can be carried out in a first reactor selected from a loop reactor or a continuously stirred tank reactor, and is generally carried out in liquid-phase. The liquid medium comprises liquid alpha-olefin monomer(s), optionally with the addition of an inert hydrocarbon solvent. Said hydrocarbon solvent can be either aromatic, such as toluene, or aliphatic, such as propane, hexane, heptane, isobutane, cyclohexane and 2,2,4-trimethylpentane. The amount of hydrocarbon solvent, if any, is lower than 40% by weight with respect to the total amount of alpha-olefins, preferably lower than 20% by weight. Preferably, step (i)a is carried out in the absence of inert hydrocarbon solvents.

The average residence time in this reactor generally ranges from 2 to 40 minutes, preferably from 5 to 25 minutes. The temperature ranges between 10°C and 50°C, preferably between 15°C and 35°C. Adopting these conditions allows to obtain a pre-polymerization degree in the preferred range from 60 to 800g per gram of solid catalyst component, preferably from 150 to 500 g per gram of solid catalyst component. Step (i)a is further characterized by a low concentration of solid in the slurry, typically in the range from 50 g to 300 g of solid per liter of slurry.

The slurry containing the catalyst, preferably in pre-polymerized form, is discharged from the pre-polymerization reactor and fed to a gas-phase or liquid-phase polymerization reactor.

In case of a gas-phase reactor, it generally consists of a fluidized or stirred, fixed bed reactor or of a reactor comprising two interconnected polymerization zones one of which, working under fast fluidization conditions (riser) and the other in which the polymer flows under the action of gravity (downer). In this latter case, the reaction mixture in the two zones can suitably be maintained different by the introduction in the downer of a gas and/or liquid mixture having a composition different from the gas mixture present in the riser, as described in International application No. WO 00/02929.

The liquid phase process can be either in slurry, solution or bulk (liquid monomer). This latter technology can be carried out in various types of reactors such as continuous stirred tank reactors, loop reactors or plug-flow ones.

The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa. Hydrogen can be used as a molecular weight regulator.

The polyolefin compositions of the present invention have the additional advantage that the articles produced therefrom do not contain phthalate residues.

The polyolefin compositions of the present invention can also contain additives commonly employed in the art, such as antioxidants, light stabilizers, heat stabilizers, nucleating agents, colorants and fillers. Particularly, they can comprise an inorganic filler agent in an amount ranging from 0.5 to 60 parts by weight with respect to 100 parts by weight of the said polyolefin composition. Typical examples of such filler agents are calcium carbonate, barium sulphate, titanium bioxide and talc. Talc and calcium carbonate are preferred. A number of filler agents can also have a nucleating effect, such as talc that is also a nucleating agent.

It has been surprisingly found that the polyolefin compositions of the present invention show improved optical properties, notably haze, as well as excellent impact properties, particularly bi-axial impact resistance, making them particularly suitable for producing extrusion blow molded articles.

It is therefore a further object of the present invention an extrusion blow molded article obtained from a polyolefin composition comprising:

(a) a propylene-ethylene copolymer having a content of units deriving from ethylene of 4.0 % by weight or higher, preferably ranging from 4.0 to 7.0 % by weight, and
(b) a nucleating agent;

wherein the composition has a crystallization temperature (Tc), measured by DSC, higher than 117°C, preferably higher than 117.5°C, more preferably higher than 118°C.
According to a still further object, the present invention provides a process for producing extrusion blow molded articles comprising the steps of:

(i) extruding a hollow cylinder (parison) from a molten polyolefin composition comprising:

(a) a propylene-ethylene copolymer having a content of units deriving from ethylene of 4.0 % by weight or higher, preferably ranging from 4.0 to 7.0 % by weight, and
(b) a nucleating agent,
wherein the composition has a crystallization temperature (Tc), measured by DSC, higher than 117°C, preferably higher than 117.5°C, more preferably higher than 118°C; and

(ii) blow molding the extruded parison to form a blow-molded article.

The extruded parison in clamped in a mold and, while still warm enough to be soft and moldable, subjected to significant internal air pressure and expanded against the mold, then cooled and ejected. Flash is an inevitable by-product of the extrusion blow molding process and trim tooling is needed to remove the flash from the blow molded articles. The cooling step is therefore the rate limiting factor in the process and the cooling capacity of the molten material is of the uttermost importance in determining the minimum cycle time. It has been found that by using the propylene-based polymer compositions of the invention the cycle time of extrusion blow molding processes can be significantly reduced with respect to the same processes wherein a conventional polypropylene is used.
The following examples are given to illustrate the present invention without any limiting purpose.

**Methods**

Molar ratio of feed gases

Determined by gas-chromatography.

Average Particle Size of the adduct and catalysts

Determined by a method based on the principle of the optical diffraction of monochromatic laser light with the "Malvern Instr. 2600" apparatus. The average size is given as P50.

Comonomer content

The content of comonomers was determined by infrared spectroscopy by collecting the IR spectrum of the sample vs. an air background with a Fourier Transform Infrared spectrometer (FTIR). The instrument data acquisition parameters are:

- purge time: 30 seconds minimum
- collect time: 3 minutes minimum
- apodization: Happ-Genzel
- resolution: 2 cm-1.

Sample Preparation - Using a hydraulic press, a thick sheet is obtained by pressing about g 1 of sample between two aluminum foils. A small portion is cut from this sheet to mold a film. Recommended film thickness ranges between 0.02 and 0.05 cm (8 - 20 mils). Pressing temperature is 180±10°C (356°F) and about 10 kg/cm2 (142.2 PSI) pressure for about one minute. The pressure is released, the sample removed from the press and cooled to room temperature.
The spectrum of pressed film sample is recorded in absorbance vs. wavenumbers (cm-1). The following measurements are used to calculate ethylene and 1-butene content:

- Area (At) of the combination absorption bands between 4482 and 3950 cm -1 which is used for spectrometric normalization of film thickness;
- Area (AC2) of the absorption band between 750-700 cm-1 after two proper consecutive spectroscopic subtractions of an isotactic non-additivated polypropylene spectrum and then of a reference spectrum of an 1-butene-propylene random copolymer in the range 800-690 cm-1;
- Height (DC4) of the absorption band at 769 cm-1 (maximum value), after two proper consecutive spectroscopic subtractions of an isotactic non-additivated polypropylene spectrum and then of a reference spectrum of an ethylene-propylene random copolymer in the range 800-690 cm-1.

In order to calculate the ethylene and 1-butene content, calibration straights lines for ethylene and 1-butene obtained by using samples ofknown amount of ethylene and 1-butene are needed:

Calibration for ethylene - A calibration straight line is obtained by plotting AC2/At versus ethylene molar percent (%C2m). The slope GC2 is calculated from a linear regression.
Calibration for 1-butene - A calibration straight line is obtained by plotting DC4/At versus butene molar percent (%C4m). The slope GC4 is calculated from a linear regression.

The spectra of the unknown samples are recorded and then (At), (AC2) and (DC4) of the unknown sample are calculated. The ethylene content (% molar fraction C2m) of the sample is calculated as follows:

$$\%C2m = \frac{1}{G_{C2}} \cdot \frac{A_{C2}}{A_t}$$

The 1-butene content (% molar fraction C4m) of the sample is calculated as follows:

$$\%C4m = \frac{1}{G_{C4}} \cdot \left(\frac{A_{C4}}{A_t} - I_{C4}\right)$$

The propylene content (molar fraction C3m) is calculated as follows:

$$C3m = 100 - \%C4m - \%C2m$$

The ethylene, 1-butene contents by weight are calculated as follows:

$$\%C2wt = 100 \cdot \frac{28 \cdot C2m}{(56 \cdot C4m + 42 \cdot C3m + 28 \cdot C2m)}$$

$$\%C4wt = 100 \cdot \frac{56 \cdot C4m}{(56 \cdot C4m + 42 \cdot C3m + 28 \cdot C2m)}$$

<u>Melt flow rate (MFR "L")</u>

Determined according to ISO 1133 (230°C, 2.16 Kg)

Melting temperature ($T_m$) and crystallization temperature ($T_c$)

Both determined by differential scanning calorimetry (DSC) according to the ASTM D 3417 method, which is equivalent to the ISO 11357/1 and 3 method.

Xylene solubles

Determined as follows: 2.5 g of polymer and 250 ml of xylene are introduced in a glass flask equipped with a refrigerator and a magnetic stirrer. The temperature is raised in 30 minutes up to the boiling point of the solvent. The so obtained clear solution is then kept under reflux and stirring for further 30 minutes. The closed flask is then kept in thermostatic water bath at 25° C for 30 minutes. The so formed solid is filtered on quick filtering paper. 100 ml of the filtered liquid is poured in a previously weighed aluminum container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

Ductile brittle transition temperature (DB/TT)

According to this method, the bi-axial impact resistance is determined through impact with an automatic, computerized striking hammer. The circular test specimens are obtained by cutting with circular hand punch (38 mm diameter) plaques obtained as described below. The circular test specimens are conditioned for at least 12 hours at 23°C and 50 RH and then placed in a thermostatic bath at testing temperature for 1 hour. The force-time curve is detected during impact of a striking hammer (5.3 kg, hemispheric punch with a ½" diameter) on a circular specimen resting on a ring support. The machine used is a CEAST 6758/000 type model no. 2. The DB/TT is the temperature at which 50% of the samples undergoes fragile break when submitted to the above-mentioned impact test. The plaques for DB/TT measurements, having dimensions of 127x127x1.5 mm are prepared according to the following method. The injection press is a Negri Bossi™ type (NB 90) with a clamping force of 90 tons. The mold is a rectangular plaque (127□127□1.5mm). Main process parameters are reported below:

- Back pressure: 20 bar
- Injection time: 3 sec
- Maximum Injection pressure: 14 MPa
- Hydraulic injection pressure: 6-3 MPa
- First holding hydraulic pressure: 4±2 MPa
- First holding time: 3 sec
- Second holding hydraulic pressure: 3±2 MPa
- Second holding time: 7 sec
- Cooling time: 20 sec
- Mold temperature: 60 °C
- Melt temperature 220 to 280 °C

Haze (on 1 mm plaque)

According to the present method, 5x5 cm specimens are cut molded plaques of 1 mm thick and the haze value is measured using a Gardner photometric unit connected to a Hazemeter type UX-10 or an equivalent instrument having G.E. 1209 light source with filter "C". Reference samples of known haze are used for calibrating the instrument. The plaques to be tested are produced according to the following method. 75x75x1 mm plaques are molded with a GBF Plastiniector G235/90 Injection Molding Machine, 90 tons under the following processing conditions:

- Screw rotation speed: 120 rpm
- Back pressure: 10 bar
- Melt temperature: 260 °C
- Injection time: 5 sec
- Switch to hold pressure: 50 bar
- First stage hold pressure: 30 bar
- Second stage pressure : 20 bar
- Hold pressure profile (1st stage): 5 sec
- Hold pressure profile (2nd stage): 10 sec
- Cooling time: 20 sec

- Mold water temperature: 40 °C

**Example 1**

Preparation of the solid catalyst component

Into a 500 mL four-necked round flask, purged with nitrogen, 250 mL of $TiCl_4$ were introduced at 0°C. While stirring, 10.0 g of microspheroidal $MgCl_2 \cdot 2.1C_2H_5OH$ having average particle size of 47μm (prepared in accordance with the method described in example 1 of EP728769) and an amount of diethyl 2,3-diisopropylsuccinate such as to have a Mg/succinate molar ratio of 15 were added. The temperature was raised to 100°C and kept at this value for 60 minutes. After that the stirring was stopped and the liquid was siphoned off. After siphoning, fresh $TiCl_4$ and an amount of 9,9-bis(methoxymethyl)fluorene such as to have a Mg/diether molar ratio of 30 were added. Then the temperature was raised to 110°C and kept for 30 minutes under stirring. After sedimentation and siphoning at 85°C, fresh $TiCl_4$ was added. Then the temperature was raised to 90°C for 15min. After sedimentation and siphoning at 90°C the solid was washed three times with anhydrous hexane (3 x 100 ml) at 60 °C and additional three times with anhydrous hexane (3 x 100 ml) at 25 °C . The obtained solid catalyst component had a total amount of internal electron donor compounds of 12.0% by weight with respect to the weight of the solid catalyst component.

Preparation of the catalyst system - Precontact

Before introducing it into the polymerization reactors, the solid catalyst component described above is contacted with aluminum-triethyl (TEAL) and with di-cylopentyl-di-methoxy-silane (DCPMS) under the conditions reported in Table 1.

Prepolymerization

The catalyst system is then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quantities of monomers and hydrogen fed to the polymerization reactor are reported on Table 1.

The polymer particles were blended with 900 ppm of ADK-NA21 (Adeka Palmarole) in a Werner 53 extruder. Characterization data of the so obtained composition are reported in Table 2.

**Example 2C (comparative)**

Example 1 of WO 2008/012144.

Table 1 - Polymerization conditions

| Example | 1 |
|---|---|
| Temperature (°C) | 15 |
| Residence time (min) | 11 |
| Catalyst (g/h) | 2.0 |
| Teal (g/h) | 12.5 |
| Teal/donor ratio (g/g) | 3.5 |
| Temperature (°C) | 30 |

(continued)

| Example | 1 |
|---|---|
| Residence time (min) | 6.5 |
| Prepolymerization degree (g pol./g cat.) | 350 |
| Temperature (°C) | 70 |
| Pressure (barg) | 22 |
| Residence time (min) | 80 |
| $C_2^-$ /C2- + C3- (mol/mol) RISER | 0.055 |
| $H_2/C_3^-$ (mol/mol) RISER | 0.013 |
| $C_2^-$ /C2- + C3- (mol/mol) DOWNER | 0.004 |
| $H_2/C_3^-$ (mol/mol) DOWNER | 0.0003 |
| Notes: $C2^-$ = ethylene; $C_3^-$ = propylene; $H_2$= hydrogen | |

Table 2 - Composition characterization

| Example | | 1 | 2C |
|---|---|---|---|
| Ethylene content | % | 4.6 | 4.7 |
| MFR "L" | g/10' | 2.0 | 2.0 |
| Xylene solubles | Wt% | 14.2 | 12.8 |
| $T_m$ | °C | 155.0 | 154.5 |
| $T_c$ | °C | 118.2 | 116.3 |
| Haze | % | 13.5 | 16.6 |
| DB/TT | °C | -6.2 | -5.4 |

The data in Table 2 confirm that the polyolefin compositions of the present invention show improved optical (haze) properties. Also their impact behavior (bi-axial impact resistance) is improved.

## Claims

**1.** A polyolefin composition comprising:

(i) a propylene-ethylene copolymer having a content of units deriving from ethylene of 4.0 % by weight or higher, preferably ranging from 4.0 to 7.0 % by weight, and
(ii) a nucleating agent;

wherein the composition has a crystallization temperature (Tc), measured by DSC, higher than 117°C, preferably higher than 117.5°C, more preferably higher than 118°C.

**2.** The composition according to claim 1, wherein the nucleating agent is present in the composition in amounts of up to 2500 ppm, preferably from 500 to 2000 ppm.

**3.** The composition according to claim 1 or to claim 2, wherein the nucleating agent is selected among 3,4-dimethyldibenzylidenesorbitol, aluminum-hydroxy-bis[2,2'-methylene-bis(4,6-di-t-butylphenyl)phosphate], sodium or lithium 2,2'-methylene-bis(4,6-ditertbutylphenyl)phosphate and bicyclo[2.2.1]heptane-2,3-dicarboxylic acid, disodium salt (1R,2R,3R,4S).

**4.** A process for the preparation of a propylene-ethylene copolymer comprising the step of copolymerizing propylene

and ethylene in the presence of a catalyst system comprising the product obtained by contacting the following components:

(a) a solid catalyst component comprising a magnesium halide, a titanium compound having at least a Ti-halogen bond and at least two electron donor compounds one of which being present in an amount from 40 to 90% by mol with respect to the total amount of donors and selected from succinates and the other being selected from 1,3 diethers,
(b) an aluminum hydrocarbyl compound, and
(c) optionally an external electron donor compound.

**5.** The process according to claim 4, wherein the succinate is of formula (I):

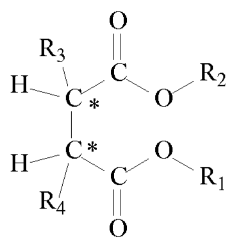

(I)

wherein the radicals $R_1$ and $R_2$, equal to, or different from, each other are a $C_1$-$C_{20}$ linear or branched alkyl, alkenyl, cycloalkyl, aryl, arylalkyl or alkylaryl group, optionally containing heteroatoms; and the radicals $R_3$ and $R_4$ equal to, or different from, each other, are $C_1$-$C_{20}$ alkyl, C3-C20 cycloalkyl, C5-C20 aryl, arylalkyl or alkylaryl group with the proviso that at least one of them is a branched alkyl; said compounds being, with respect to the two asymmetric carbon atoms identified in the structure of formula (I), stereoisomers of the type (S,R) or (R,S).

**6.** The process according to claim 4 or to claim 5, wherein the 1,3-diether is of formula (II):

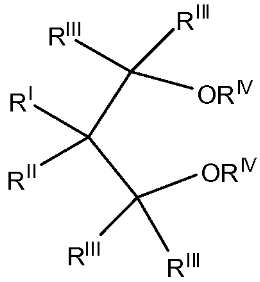

(II)

wherein $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

**7.** The process according to any of claims 4 to 6, wherein the catalyst component (a) has an average particle size ranging from 15 to 80 μm.

**8.** The process according to any of claims 4 to 7, wherein the succinate is present in amount ranging from 40 to 90% by mol with respect to the total amount of internal donors.

**9.** An extrusion blow molded article obtained from a polyolefin composition comprising:

(a) a propylene-ethylene copolymer having a content of units deriving from ethylene of 4.0 % by weight or higher, preferably ranging from 4.0 to 7.0 % by weight, and
(b) a nucleating agent;

wherein the composition has a crystallization temperature (Tc), measured by DSC, higher than 117°C, preferably higher than 117.5°C, more preferably higher than 118°C.

**10.** A process for producing extrusion blow molded articles comprising the use of a polyolefin composition comprising the steps of:

(i) extruding a hollow cylinder, called a parison, from a molten polyolefin composition comprising:

(a) a propylene-ethylene copolymer having a content of units deriving from ethylene of 4.0 % by weight or higher, preferably ranging from 4.0 to 7.0 % by weight, and
(b) a nucleating agent,

wherein the composition has a crystallization temperature (Tc), measured by DSC, higher than 117°C, preferably higher than 117.5°C, more preferably higher than 118°C;
and
(ii) blow molding the extruded parison to form a blow-molded article.

Europäisches Patentamt
European Patent Office
Office européen des brevets

# EUROPEAN SEARCH REPORT

Application Number
EP 13 16 4134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 816 158 A1 (BOREALIS TECH OY [FI]) 8 August 2007 (2007-08-08) * paragraphs [0015], [0016]; examples 3,5 * ----- | 1,2 | INV. C08F210/06 |
| X | WO 2011/061134 A1 (BASELL POLIOLEFINE SRL [IT]; COLLINA GIANNI [IT]; CIARAFONI MARCO [IT]) 26 May 2011 (2011-05-26) * claims 1-14 * ----- | 4-8 | |

TECHNICAL FIELDS SEARCHED (IPC)
C08F

The present search report has been drawn up for all claims

1

| Place of search | Date of completion of the search | Examiner |
|---|---|---|
| Munich | 29 May 2013 | Knutzen-Mies, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT ON EUROPEAN PATENT APPLICATION NO.** EP 13 16 4134

This annex lists the patent family members relating to the patent documents cited in the above-mentioned European search report. The members are as contained in the European Patent Office EDP file on
The European Patent Office is in no way liable for these particulars which are merely given for the purpose of information.

29-05-2013

| Patent document cited in search report | Publication date | Patent family member(s) | Publication date |
|---|---|---|---|
| EP 1816158 A1 | 08-08-2007 | AU 2007214111 A1 | 16-08-2007 |
| | | CN 101379129 A | 04-03-2009 |
| | | EP 1816158 A1 | 08-08-2007 |
| | | KR 20080091474 A | 13-10-2008 |
| | | WO 2007090519 A1 | 16-08-2007 |
| WO 2011061134 A1 | 26-05-2011 | CN 102597022 A | 18-07-2012 |
| | | EP 2501727 A1 | 26-09-2012 |
| | | US 2012232221 A1 | 13-09-2012 |
| | | WO 2011061134 A1 | 26-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008012144 A
- US P4298718 A
- US P4495338 A
- WO 0002929 A
- EP 728769 A
- EP 782587 A